# NEUE EUROPÄISCHE PATENTSCHRIFT

(11) **EP 2 689 065 B2**
(45) Veröffentlichungstag und Bekanntmachung des Hinweises auf die Entscheidung über den Einspruch: **20.07.2022**
(45) Hinweis auf die Patenterteilung: 28.01.2015
(21) Anmeldenummer: 12724883.9
(22) Anmeldetag: 19.03.2012
(51) Int. Cl.: B23K 37/08, D21F 5/02, D21F 5/18

(54) **VERFAHREN ZUR HERSTELLUNG EINES YANKEEZYLINDERS**
MANUFACTURING METHOD OF A YANKEE CYLINDER
PROCÉDÉ DE PRODUCTION D'UN CYLINDRE FRICTIONNEUR

(30) Priorität: 21.03.2011 AT 3962011; 05.09.2011 EP 11007162
(43) Veröffentlichungstag der Anmeldung: 29.01.2014
(73) Patentinhaber: Andritz AG, 8045 Graz (AT)
(72) Erfinder: KRASSER, Josef, A-8103 Rein (AT); MAIER, Markus, A-8301 Lassnitzhöhe (AT); KAHSIOVSKY, Ludwig, A-8044 Weinitzen (AT); SCHMIDHOFER, Rupert, 8111 Judenendorf-Strassengel (AT)
(74) Vertreter: Tschinder, Thomas
(86) Internationale Anmeldenummer: PCT/EP2012/001199
(87) Internationale Veröffentlichungsnummer: WO 2012/126602

(56) Entgegenhaltungen:
- US-A- 3 052 039
- US-A- 6 018 870

## Beschreibung

Den Gegenstand der Erfindung bildet ein Verfahren zur Fertigung eines Yankeezylinders aus Stahl.

Für die Herstellung von Papierbahnen oder Tissue ist es üblich, sogenannte Yankeezylinder im Trocknungsprozess einzusetzen. Dabei wird die feuchte Faserstoffbahn von einer Bespannung an den rotierenden Yankeezylinder übergeben, an dessen Oberfläche in Sekundenbruchteilen getrocknet und danach mit Hilfe von Schabern wieder abgelöst.

Yankeezylinder haben meist einen sehr großen Durchmesser. Sie werden von Innen her mit Dampf beheizt und sie sind schwer herstellbar, da sehr hohe Anforderungen in Bezug auf die zu beherrschenden internen Drücke, die Dichtheit und die großen Durchmesser erfüllt werden müssen.

Handelsübliche Yankeezylinder weisen beispielsweise folgende Dimensionen auf:

| | |
|---|---|
| Zylinderdurchmesser: | 2000 mm bis 6500 mm |
| Hohlwellendurchmesser: | 1000 mm bis 2500 mm |
| Zylinderlänge: | 3000 mm bis 8500 mm |
| Zylindermasse: | 35 t bis 140 t |

Diese Zylinder werden überwiegend aus Gusseisen hergestellt, aus dem U.S. Patent US 4,196,689 und der WO 2008/105005 A1 sind aber auch bereits Yankeezylinder aus Stahl bekannt.

Die US 3,052,039 offenbart beispielsweise einen Yankeezylinder aus Stahl, bei dem der Zylindermantel aus einzelnen Mantelblechen zusammengeschweißt wird. Der fertige Zylindermantel wird dann nach dem Zusammenschweißen an seiner Innenseite und an seiner Außenseite einer mechanischen Bearbeitung unterzogen. Ebenso offenbart die US 6,018,870 einen Trocknungszylinder aus Stahl, der aus mehreren Segmenten zusammengesetzt ist. Hierbei handelt es sich jedoch nicht um einen Yankeezylinder sondern um einen Trockenzylinder, dessen Zylindermantel mit Dampfbohrungen durchsetzt ist.

Gewöhnlich besteht ein Yankeezylinder aus einer zylindrischen Mantelfläche, welche an den Enden mit Enddeckeln verschlossen wird. Die beiden Deckel können dabei mit dem Zylindermantel verschraubt oder auch verschweißt werden.

Ein Yankeezylinder wird über Zapfen drehbar gelagert und weist in seinem Inneren eine Hohlwelle oder Achse auf, durch die Dampf zur Beheizung in den Zylinder eingebracht wird bzw. Abdampf und Kondensat abgeführt werden kann.

Oft weist der Zylindermantel an seiner Innenfläche eine große Anzahl von Rillen auf, die den Wärmeübergang von der beheizten Zylinderinnenseite zur Zylinderoberfläche verbessern, ohne die Bauteilfestigkeit des Mantels gravierend zu schwächen.

Herkömmliche Yankeezylinder aus Gusseisen werden immer an einem bestimmten Fertigungsstandort hergestellt und als Ganzes zum zukünftigen Einsatzort transportiert. Auch Yankeezylinder aus Stahl mussten bisher immer an einem bestimmten Fertigungsstandort gefertigt werden.
Bei der herkömmlichen Fertigungsmethode von Stahlzylindern werden einzelne Mantelbleche zugeschnitten, eingerollt und danach zu einem fertigen Zylindermantel zusammengeschweißt. Der fertige Zylindermantel wird dann sowohl an seiner Innenseite als auch an seiner Außenseite einer aufwendigen Bearbeitung, insbesondere einer Drehbearbeitung, unterzogen. Dafür sind sehr große Drehmaschinen erforderlich, in denen ein aufrecht stehender Yankeezylinder bearbeitet werden kann. Maschinen, die auch in der Lage sind, Yankeezylinder mit einer Länge von über 6 Metern bearbeiten zu können, sind nur bei wenigen Anlagenbauern vorhanden.

Durch diese herkömmliche Fertigungsmethode können viele potentielle Kunden nicht mit großen Yankeezylindern, also mit Zylindern mit einem Durchmesser von 6,5 m und einer Breite von 6m beliefert werden, da es oft nicht möglich ist, derart große und schwere Bauteile zum Kunden zu liefern bzw. weil ein derartiger Transport mit einem zu großen Aufwand verbunden wäre.

Ziel der Erfindung ist es daher, ein Herstellverfahren für einen Yankeezylinder zu beschreiben, das es ermöglicht, dass auch Kunden mit einem großen Yankeezylinder beliefert werden können, bei denen bisher eine Belieferung auf Grund der Transportschwierigkeiten nicht möglich war.

Das erfindungsgemäße Fertigungsverfahren des Yankeezylinders aus Stahl umfasst dabei folgende Schritte:
a.) Zuschnitt und Einrollen von einzelnen Mantelblechen an einem bestimmten Fertigungsstandort;
b.) Verschweißen der Mantelbleche zu zwei oder mehreren Zylinderschüssen am Fertigungsstandort;
c.) Transport der einzelnen Zylinderschüsse vom Fertigungsstandort weg zu einem Montageort;
d.) Verschweißen der Zylinderschüsse am Montageort zu einem vollständigen Zylindermantel des Yankeezylinders.

Die Erfindung beruht also darauf, kürzere Zylinderschüsse einzeln herzustellen und diese dann vom Fertigungsstandort, beispielweise von einem Anlagenbauer, zum endgültigen Montageort zu liefern. Erst am Montageort erfolgt dann das Zusammenschweißen der einzelnen Zylinderschüsse zum vollständigen Zylindermantel des Yankeezylinders.
Unter Montageort wird im Sinne dieser Erfindung ein Ort verstanden, an dem die einzelnen Zylinderschüsse zusammengeschweißt werden und der sich nicht am Werksgelände des Fertigungsstandortes befindet.
Der Transport der einzelnen Zylinderschüsse zum Montageort erfolgt entweder mit geeigneten Transportfahrzeugen (Schwertransportern) auf dem Landweg oder aber auch mit Hilfe von Schiffen auf dem Wasserweg.

Der Montageort befindet sich erfindungsgemäß in unmittelbarer Nähe zum zukünftigen Einsatzort des Yankeezylinders, vorzugsweise befindet sich dieser Montageort am Werksgelände eines Papiermaschinen- oder Tissuemaschinenbetreibers. Die einzelnen Zylinderschüsse mit bereits stirnseitig angebauten Deckeln können einzeln viel leichter und günstiger zum Kunden transportiert werden, als fertig zusammengebaute Zylinder.

Es ist günstig, wenn die einzelnen Zylinderschüsse am Fertigungsstandort an ihrer Innenseite und gegebenenfalls auch an ihren jeweiligen Stirnseiten fertig drehbearbeitet werden.

Während dieser Drehbearbeitung der Innenseite wird einerseits die Zylinderwand geglättet und andererseits auch eine exakte Zylinderform hergestellt. Vorzugsweise hat der Yankeezylinder im Inneren in Umfangsrichtung umlaufende Rillen, da dadurch die Wärmeübertragung vom Dampf an die Zylinderwand verbessert wird. Diese Rillen werden dann vorzugsweise am Fertigungsstandort hergestellt.

Vorzugsweise werden die einzelnen Zylinderschüsse am Fertigungsstandort auch an ihrer Außenseite fertig drehbearbeitet.
Durch das erfindungsgemäße Verfahren können nun auch sehr große Yankeezylinder mit einer Länge von beispielsweise 6 Metern mit verhältnismäßig kleinen Drehbearbeitungsmaschinen hergestellt werden.
Somit sind für die gesamte mechanische Bearbeitung des Zylindermantels, also für die Dreh- und Fräsbearbeitung keine großen Bearbeitungsmaschinen erforderlich. Der ganze Zylindermantel wird dann nach dem Verschweißen lediglich einer Schleifbearbeitung unterzogen. Bei der Schleifvorrichtung handelt es sich aber primär um eine Hilfskonstruktion, die einen weit weniger komplexen Aufbau als eine Drehbearbeitungsmaschine aufweist.

Es ist günstig, wenn das Verschweißen der einzelnen Zylinderschüsse gemäß Schritt d.) zumindest von einer Seite her durch einen mobilen Schweißroboter bzw. durch ein elektro-mechanisches Schweißfahrwerk, der oder das auf einer an den Zylinderschüssen angebrachten Hilfsschiene geführt ist, durchgeführt wird.

Unter einem mobilen Schweißroboter wird ein Schweißroboter verstanden, der leicht und mit geringem Aufwand an unterschiedliche Einsatzorte transportiert werden kann. Hierbei erweisen sich Engspaltschweißroboter bzw. elektro-mechanische Schweißfahrwerke als besonders nützlich. Somit kann beim Kunden der endgültige Zusammenbau des Yankeezylinders erfolgen, ohne dass der Kunde hierzu spezielle Bearbeitungs- oder Schweißmaschinen besitzen muss.

Vor Ort bzw. in der Nähe des Einsatzstandortes kann dann auch noch eine mechanische Fertigbearbeitung der einzelnen Zylinderschüsse an der Außenseite erfolgen.

Erfindungsgemäß werden am Fertigungsstandort die beiden Enddeckel mit den jeweiligen Zylinderschüssen verbunden, vorzugsweise verschweißt, da die Enddeckel die Zylinderschüsse während des Transportes stabilisieren.

Es ist auch sinnvoll, wenn die jeweiligen Zylinderschüsse während des Transportes vom Fertigungsstandort zum Montageort zusätzlich durch eine Hilfskonstruktion aus Stahl, beispielsweise durch Stahlringe, stabilisiert werden.

Damit die geometrische Form des Zylinders nicht durch Schweißverzüge bzw. Schrumpfungen verändert wird, muss ein geeignetes Schweißverfahren für das Zusammenfügen der einzelnen Zylinderschüsse zu einem ganzen Zylinder gewählt werden. Es hat sich als sehr günstig erwiesen, für das Verschweißen der Zylinderschüsse das Engspalt-Schweißverfahren zu benutzen. Es gewährleistet, neben einer ausgezeichneten Schweißqualität, auch geringe Schweißschrumpfungen. Eine allfällige Gegenschweißung von der Gegenseite kann mit üblichen Schweißverfahren durchgeführt werden.

Es ist günstig, wenn die innen liegende Schweißnaht, also die Schweißnaht an der Zylinderinnenseite, mit dem Engspalt-Schweißverfahren gezogen wird, da diese Schweißnaht erheblich zur Stabilität des Yankeezylinders beiträgt. Das Engspalt-Schweißverfahren wird vorzugsweise durch einen Schweißroboter bzw. durch ein elektro-mechanisches Schweißfahrwerk ausgeführt. Die Schweißnaht an der Zylinderaußenseite kann dann von Hand gezogen werden.
Bei gerillten Zylindern kann die Schweißnaht dabei sowohl zwischen den Rillen des Zylinders wie auch in einer Rille des Zylinders liegen.

Die gebildete Schweißnaht kann dann gegebenenfalls am Montageort nachbearbeitet werden, dies kann aber auch durch kleinere Bearbeitungsmaschinen erfolgen.

Der fertig zusammengeschweißte Yankeezylinder kann dann noch am zukünftigen Einsatzort geschliffen, beschichtet und erneut geschliffen werden, vorzugsweise mit einer mobilen Hilfskonstruktion.

Im Folgenden wird die Erfindung anhand von Zeichnungen beschrieben.
Es zeigt:
Fig. 1 einen Yankeezylinder aus Stahl;
Fig. 2 den fertig zusammengeschweißten Zylindermantel;
Fig. 3a und Fig. 3b die mögliche Lage der Schweißnähte;
Fig. 4a, b, c unterschiedliche Ausführungen der Schweißnaht;

Gleiche Bezugszeichen in den einzelnen Figuren bezeichnen jeweils gleiche Bauteile.

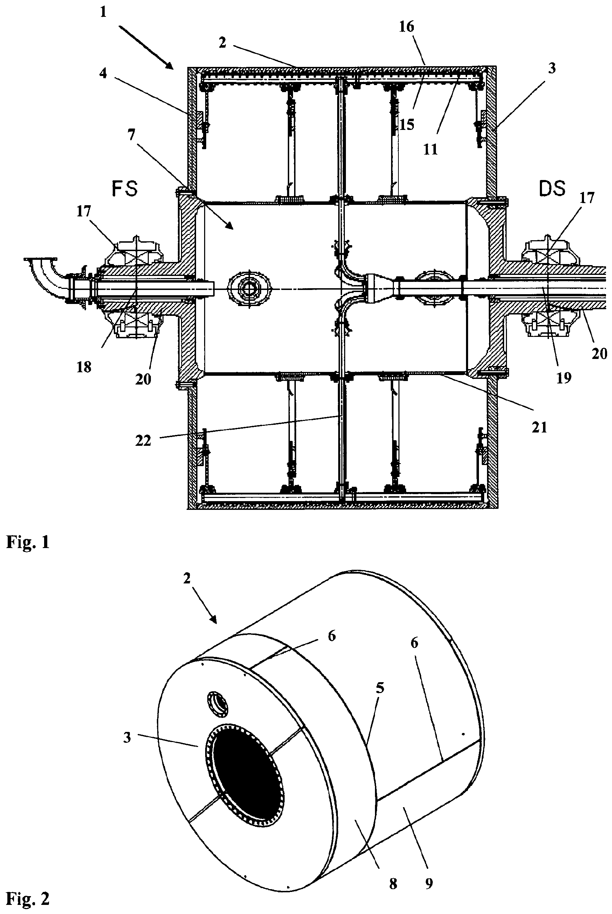

In Fig. 1 ist ein Yankeezylinder 1 dargestellt. Er besteht aus einem zylinderförmigen Stahlmantel 2, der mit den beiden Enddeckeln 3 und 4 verschweißt bzw. verschraubt ist.
Im Inneren des Yankeezylinders 1 befindet sich eine Zentralwelle 7 mit dem Zentralteil 21 und den beiden Lagerzapfen 20, die in den Lagern 17 drehbar gelagert sind.

Über die Dampfzufuhr 18 wird dem Yankeezylinder 1 im Betrieb Dampf zugeführt. Abdampf bzw. Kondensat wird über die Kondensatleitung 22 bzw. 19 aus dem Yankeezylinder abgeführt.
An der Zylinderinnenseite 15 befindet sich eine Vielzahl von Rillen 11, die in Umfangsrichtung des Yankeezylinders 1 verlaufen. Durch die Rillen 11 wird der Wärmeübergang zur Zylinderaußenseite 16 begünstigt und die Kondensatabfuhr erleichtert.

Bei den bisherigen Herstellungsverfahren nach dem Stand der Technik werden einzelne Mantelbleche zugeschnitten, eingerollt und zu Zylinderschüssen zusammengeschweißt. Danach erfolgt die mechanische Bearbeitung des gesamten Zylindermantels an der Außen- und Innenseite, sowie an den Stirnseiten. Schlussendlich werden die stirnseitigen Deckel durch Verschrauben oder Schweißen angebracht. Besonders für die Fertigung sehr großer Yankeezylinder mit einer Länge von über 5 Meter benötigt man für die mechanische Drehbearbeitung sehr große Maschinen. Der fertige Yankeezylinder wird dann mit entsprechenden Transportfahrzeugen zu seinem Einsatzort transportiert.

Bei der vorliegenden Erfindung werden in einem ersten Schritt a.) einzelne Mantelbleche aus Stahl zugeschnitten und eingerollt. In einem zweiten Schritt b.) werden die Mantelbleche zu zwei oder mehr Zylinderschüssen 8, 9, 10 zusammengeschweißt. Diese beiden Schritte a.) und b.) erfolgen am Fertigungsstandort, also beispielsweise am Werksgelände eines Anlagenbauers. Die Zylinderschüsse 8, 9, 10 werden dann vorzugsweise am Fertigungsstandort an der Innenseite 15, sowie an den Stirnseiten mechanisch bearbeitet. Diese mechanische Drehbearbeitung kann nun mit wesentlich kleineren Maschinen als bisher durchgeführt werden, die beispielsweise nicht mehr Bearbeitungshöhen von 6 m, sondern nur noch von 3 m bewältigen können. Idealerweise werden die einzelnen Zylinderschüsse 8, 9, 10 am Fertigungsstandort an ihrer Innenseite 15 komplett fertig bearbeitet.

Die einzelnen Zylinderschüsse 8, 9, 10 werden dann entsprechend stabilisiert bzw. fixiert, auf entsprechende Transportfahrzeuge verladen und zum Montageort transportiert.
Erst dort werden die vorzugsweise fertig bearbeiteten Zylinderschüsse 8, 9, 10 zu einem fertigen Zylindermantel 2 zusammengeschweißt.

Vor dem Zusammenschweißen der einzelnen Zylinderschüsse 8, 9, 10 werden auch stirnseitig die beiden Enddeckel 3 und 4 angebaut. Dieser Anbau erfolgt am Fertigungsstandort, da durch die montierten Deckel 3, 4 die damit verbundenen Zylinderschüsse 8, 9, 10 stabilisiert werden.

In Fig. 2 ist beispielhaft ein zusammengebauter Zylindermantel 2 dargestellt. Man erkennt dabei die beiden Zylinderschüsse 8 und 9 und die beiden Schweißnähte 6, durch die die eingerollten Mantelbleche zu einem Zylinderschuss 8, 9 zusammengefügt wurden. Ein Zylinderschuss 8, 9 kann dabei aus mehreren einzelnen Mantelblechen zusammengefügt werden. In Fig. 2 ist auch die umlaufende Schweißnaht 5 dargestellt, die im Verfahrensschritt d.) erzeugt wird und die beiden Zylinderschüsse 8 und 9 verbindet. Diese Schweißnaht 5 wurde nicht am Fertigungsstandort, sondern erst am weiter entfernten Montageort gesetzt, nachdem die einzelnen Zylinderschüsse 8, 9 an ihrer Innenseite 15 fertig bearbeitet waren.

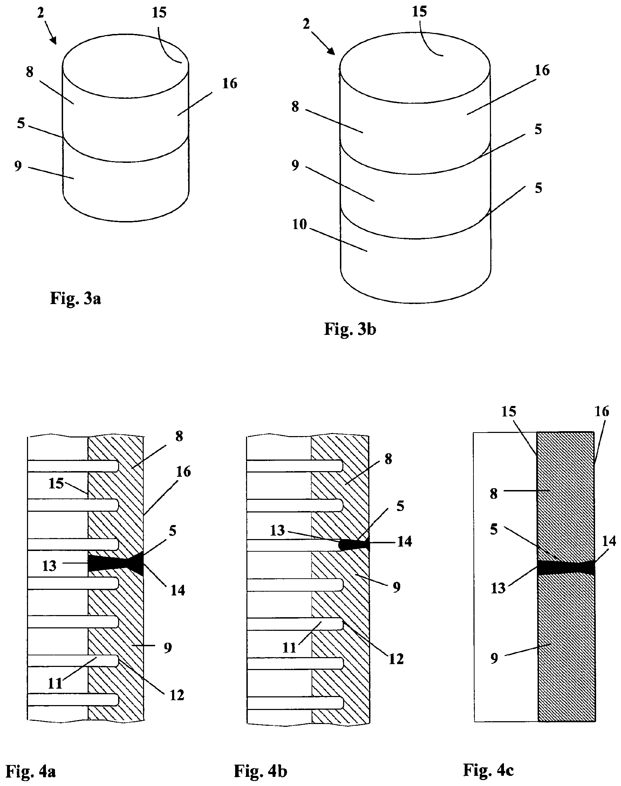

Der Zylindermantel 2 kann beispielsweise aus zwei einzelnen Zylinderschüssen 8, 9 aufgebaut werden, wie dies in den Fig. 2 und Fig. 3a dargestellt ist, er kann aber auch aus drei, wie in Fig. 3b dargestellt, oder aus mehreren einzelnen Zylinderschüssen 8, 9, 10 aufgebaut sein.

Zur Verschweißung der einzelnen Zylinderschüsse 8, 9, 10 untereinander eignet sich das sogenannte Engspalt-Schweißverfahren besonders gut. Das Engspalt-Schweißverfahren ist in Fachkreisen ein etabliertes Schweißverfahren, bei dem der Wärmeeintrag ins Material und somit auch der Wärmeverzug minimiert werden. Bei diesem Verfahren werden vorzugsweise mit dem WIG-Verfahren und mit einer pendelnden Elektrode bzw. mit einem Engspaltschwert Spalte in der Größenordnung von 2 mm - 20 mm verschweißt.
Dieses Verschweißen, zumindest von der Innenseite 15 her, kann durch einen mobilen Schweißroboter bzw. durch ein elektro-mechanisches Schweißfahrwerk, das auf einer an den Zylinderschüssen 8, 9, 10 angebrachten Hilfsschiene geführt ist, durchgeführt werden. Ein derartiger Schweißroboter lässt sich auch einfach direkt zum zukünftigen Einsatzort des Yankeezylinder 1 transportieren.

In den Figuren 4a bis 4c sind unterschiedliche Ausführungen der Schweißverbindung 5 zwischen den Zylinderschüssen 8 und 9 dargestellt.
Bei Druckbehältern, wie einem Yankeezylinder 1, wird in der Regel die Schweißverbindung 5 durch eine Innenschweißnaht 13 an der Zylinderinnenseite 15 und durch eine Außenschweißnaht 14 an der Zylinderaußenseite 16 realisiert.
Die Fig. 4a und Fig. 4b zeigen einen Zylindermantel 2 mit Rillen 11 an der Zylinderinnenseite 15. Die Innenschweißnaht 13 kann dabei zwischen zwei Rillen 11 angebracht werden, wie dies in Fig. 4a dargestellt ist, oder aber in einer Rille 11, also am Rillenboden 12. Eine derartige Innenschweißnaht 13 ist in Fig. 4b dargestellt. Fig. 4c zeigt eine Innenschweißnaht 13 und eine Außenschweißnaht 14 bei einem nicht gerillten Zylindermantel 2.

## Patentansprüche

1. Verfahren zur Fertigung eines Yankeezylinders (1) aus Stahl umfassend folgende Schritte:
a.) Zuschnitt und Einrollen von einzelnen Mantelblechen an einem bestimmten Fertigungsstandort;
b.) Verschweißen der Mantelbleche zu zwei oder mehreren Zylinderschüssen (8, 9, 10) am Fertigungsstandort;
c.) Transport der einzelnen Zylinderschüsse (8, 9, 10) vom Fertigungsstandort weg zu einem Montageort;
d.) Verschweißen der Zylinderschüsse (8, 9, 10) am Montageort zu einem vollständigen Zylindermantel (2) des Yankeezylinders (1),
wobei der Schritt d.) in der Nähe eines Einsatzstandortes für den Yankeezylinder (1), vorzugsweise am Werksgelände eines Papiermaschinen- oder Tissuemaschinenbetreibers, durchgeführt wird und
wobei am Fertigungsstandort Enddeckel (3, 4) mit den jeweiligen Zylinderschüssen (8, 9, 10) verbunden, vorzugsweise verschweißt, werden.

2. Verfahren nach Anspruch 1, **dadurch gekennzeichnet, dass** die einzelnen Zylinderschüsse (8, 9, 10) am Fertigungsstandort an ihrer Innenseite (15) fertig drehbearbeitet werden.

3. Verfahren nach Anspruch 1 oder 2, **dadurch gekennzeichnet, dass** die einzelnen Zylinderschüsse (8, 9, 10) am Fertigungsstandort an ihren jeweiligen Stirnseiten fertig bearbeitet werden.

4. Verfahren nach einem der Ansprüche 1 bis 3, **dadurch gekennzeichnet, dass** am Fertigungsstandort an der Innenseite (15) der einzelnen Zylinderschüsse (8, 9, 10) umlaufende Rillen (11) gefertigt werden.

5. Verfahren nach einem der Ansprüche 1 bis 4, **dadurch gekennzeichnet, dass** die einzelnen Zylinderschüsse (8, 9, 10) am Fertigungsstandort auch an ihrer Außenseite (16) fertig drehbearbeitet werden.

6. Verfahren nach einem der Ansprüche 1 bis 5, **dadurch gekennzeichnet, dass** der Schritt d.) zumindest von einer Seite her durch einen mobilen Schweißroboter bzw. durch ein elektro-mechanisches Schweißfahrwerk, das auf einer an den Zylinderschüssen (8, 9, 10) angebrachten Hilfsschiene geführt ist, durchgeführt wird.

7. Verfahren nach einem der Ansprüche 1 bis 6, **dadurch gekennzeichnet, dass** die einzelnen Zylinderschüsse (8, 9, 10) zumindest von einer Seite her über ein Engspalt-Schweißverfahren zusammengeschweißt werden.

8. Verfahren nach einem der Ansprüche 1 bis 7, **dadurch gekennzeichnet, dass** der fertig zusammengeschweißte Zylindermantel (2) des Yankeezylinders (1) an seinem zukünftigen Einsatzstandort beschichtet und geschliffen wird.

## Claims

1. Process for manufacturing a steel Yankee cylinder (1), comprising the following steps:
a.) Cutting and curling the individual shell plates at a specific manufacturing location;
b.) Welding the shell plates together to form two or more cylinder sections (8, 9, 10) at the manufacturing location;
c.) Transport of the individual cylinder sections (8, 9, 10) from the manufacturing location to an assembly location;
d.) Welding the individual cylinder sections (8, 9, 10) together at the assembly location to form a complete cylinder shell (2) of the Yankee cylinder (1),
where step d.) is carried out in the vicinity of the place of operation for the Yankee cylinder (1), preferably on the works premises of a paper or tissue machine operator, and
where the end faces (3, 4) are joined, preferably welded, to the respective cylinder sections (8, 9, 10) at the manufacturing location..

2. Process according to Claim 1, **characterized by** the individual cylinder sections (8, 9, 10) being finish-machined on the inside (15) on a lathe at the manufacturing location.

3. Process according to Claim 1 or 2, **characterized by** the individual cylinder sections (8, 9, 10) being finish-machined on their respective end faces at the manufacturing location.

4. Process according to one of Claims 1 to 3, **characterized by** grooves (11) being made in circumferential direction on the inside (15) of the individual cylinder sections (8, 9, 10) at the manufacturing location.

5. Process according to one of Claims 1 to 4, **characterized by** the individual cylinder sections (8, 9, 10) also being finish-machined on the outside (16) on a lathe at the manufacturing location.

6. Process according to one of Claims 1 to 5, **characterized by** step d.) being performed, at least from one side, by a mobile welding robot or an electromechanical welding carriage that runs on an auxiliary rail mounted on the cylinder sections (8, 9, 10).

7. Process according to one of Claims 1 to 6, **characterized by** the individual cylinder sections (8, 9, 10) being welded together, at least from one side, using a narrow groove welding process.

8. Process according to one of claims 1 to 7, **characterized by** the fully welded cylinder shell (2) of the Yankee cylinder (1) being coated and ground at its future place of operation.

## Revendications

1. Procédé de fabrication d'un sécheur Yankee (1) en acier, comportant les étapes suivantes :
a.) découpage et enroulement de viroles individuelles de la chemise à un certain emplacement de fabrication;
b.) assemblage des viroles de la chemise par soudage pour former deux ou plusieurs tronçons de cylindre (8, 9, 10) à l'emplacement de fabrication ;
c.) transport des tronçons de cylindre (8, 9, 10) individuels à partir de l'emplacement de fabrication vers un emplacement de montage;
d.) assemblage des tronçons de cylindre (8, 9,10) individuels par soudage, pour former une chemise de cylindre (2) complète pour le sécheur Yankee (1), à l'emplacement de montage,
dans lequel l'étape d.) est réalisée à proximité d'un emplacement d'utilisation du sécheur Yankee (1), de préférence sur le site de l'usine exploitant une machine à papier ou une machine à ouate et
dans lequel les couvercles d'embout (3, 4) sont assemblées, de préférence soudées, aux tronçons de cylindre (8, 9, 10) respectifs à l'emplacement de fabrication.

2. Procédé selon la revendication 1, **caractérisé en ce que** la surface intérieure (15) des tronçons de cylindre (8, 9, 10) individuels est soumise à un usinage de finition sur une machine à tourner à l'emplacement de fabrication.

3. Procédé selon l'une des revendications 1 ou 2, **caractérisé en ce que** les fronts respectifs des tronçons de cylindre (8, 9, 10) individuels sont soumise à un usinage de finition à l'emplacement de fabrication.

4. Procédé selon l'une des revendications 1 à 3, **caractérisé en ce que** des rainures (11) s'étendant dans le sens circonférentiel sont appliquées sur la surface intérieure (15) des tronçons de cylindre (8, 9, 10) individuels à l'emplacement de fabrication.

5. Procédé selon l'une des revendications 1 à 4, **caractérisé en ce que** la surface extérieure (16) des tronçons de cylindre (8, 9, 10) individuels est aussi soumise à un usinage de finition sur une machine à tourner à l'emplacement de fabrication.

6. Procédé selon l'une des revendications 1 à 5, **caractérisé en ce que** l'étape d.) se trouve exécutée, au moins d'un côté, par un robot de soudage mobile, respectivement par un châssis électromécanique de soudage, mené sur un rail auxiliaire monté sur les tronçons de cylindre (8, 9, 10).

7. Procédé selon l'une des revendications 1 à 6, **caractérisé en ce que** les tronçons de cylindre (8, 9, 10) individuels sont joints, au moins d'un côté, à l'aide d'un procédé de soudage de chanfrein étroit.

8. Procédé selon l'une des revendications 1 à 7, **caractérisé en ce que** la chemise de cylindre (2) du sécheur Yankee (1), après avoir complètement jointe par soudage, est revêtue et affûtée à son emplacement d'utilisation futur.
